# EUROPEAN PATENT APPLICATION

(11) **EP 4 789 544 A1**
(43) Date of publication of application: **12.08.2026**
(21) Application number: 25382101.1
(22) Date of filing: 07.02.2025
(51) Int. Cl.: A22C 11/00, B65B 19/34

(54) **MACHINE AND METHOD FOR TRANSFERRING SAUSAGES OF A CERTAIN DIAMETER FROM A FIRST CONVEYOR BELT TO A SECOND CONVEYOR BELT AND SYSTEM FOR FORMING AND TRANSFERRING BATCHES OF SAUSAGES**

(71) Applicant: Metalquimia, S.A.U., 17007 Girona (ES)
(72) Inventor: LAGARES GAMERO, Josep, 17850 GIRONA (ES)
(74) Representative: Torner, Juncosa I Associats, SL

(57) **Abstract**

Machine for transferring sausages of a certain diameter, the machine comprising: a first conveyor belt; a second conveyor belt configured to receive sausages from the first conveyor belt; a transfer unit for transferring sausages from the first conveyor belt to the second conveyor belt; wherein the transfer unit comprises: one or more transfer belts arranged above the second conveyor belt and at least partially facing it, and defining, at a bottom part, a transfer surface extending parallel to the second conveyor belt and spaced apart from it at a distance substantially equal to the diameter of the sausages; said transfer surface being configured to contact an upper region of the sausages coming from the first conveyor belt and drag them to the second conveyor belt.

## Description

### Technical field

The present invention is directed to a machine and to a method for transferring sausages of a certain diameter from a first conveyor belt to a second conveyor belt.

The present invention also discloses a system for transferring batches of sausages comprising the aforementioned machine for transferring sausages of a certain diameter from a first conveyor belt to a second conveyor belt.

### Background of the Invention

In the meat industry and, in particular, in the sausage manufacturing industry, is necessary to transfer sausages from one place to another, typically from one conveyor belt to another.

When transferring sausages from one conveyor belt to another, one of the difficulties to be taken into account is that, usually, there are some variations in size, shape, diameter, etc. between different sausages, which increase the difficulty of the process, as the transfer of sausages should be made irrespective of the variations in size, diameter, etc.

Moreover, sausages are typically soft, and, consequently, can be easily damaged if, for example, excessive pressure is applied to them or parts thereof. Damaging sausages while manipulating them should be avoided.

Additionally, sausages are foodstuff and, thus, its manipulation has to meet certain regulations, particularly, the ones relating to hygiene and preservation of food.

EP3732976A1 relates to a system for transferring sausage-shaped products, like sausages, containing a flowable filling material in a tubular or bag-shaped packaging casing from a discharge device of a processing machine for processing the sausage-shaped products to a handling device for the sausage-shaped products. The system comprises conveyor means for subsequently receiving sausage-shaped products discharged from the discharge device in a discharge direction and for conveying the sausage-shaped products in a feeding direction to a releasing position in which the sausage-shaped products can be removed from the conveyor means, drive means for driving said conveyor means in the feeding direction being at least substantially parallel to the discharge direction of the discharge device, guiding means for guiding the sausage-shaped products when conveyed by the conveyor means in the feeding direction and at least one shaping box for subsequently receiving a sausage-shaped product released from the conveyor means in the releasing position, wherein the at least one shaping box is provided at least substantially underneath the conveyor means in a receiving position for receiving the sausage-shaped product released in a release direction substantially perpendicular to the feeding direction. A bridge is disclosed to connect a discharge device and a system. The bridge may either be attached to discharge device and/or to system by suitable connection means, such as a foldable hinge, preferably having a locking mechanism. Bridge serves to bridge end sections of the discharge device of processing machine and conveyor means of the system.

EP1937578A1 relates to a device for transferring elongate food products, comprising: a carrier with a carrying surface for supporting a row of elongate food products, and a displaceable transfer means positioned at least partially above the carrier and provided with a least one contact surface for urging at least one elongate food product from the carrier. The invention also relates to a method for transferring at least one elongate food product supplied on the carrying surface of a carrier.

US5052542A discloses an item transfer apparatus that has a first conveyor for advancing items thereon in a first advancing direction; a second conveyor for advancing items thereon in a second advancing direction; and a rotatable transfer device having a rotary axis and a pushing member arranged for motion across the first conveyor for displacing items from the first conveyor to the second conveyor. The rotary axis lies in a plane oriented parallel to the conveying plane of the first conveyor.

Automatic machines that employ robotic arms to from groups of sausages and to transfer them to subsequent stations of their manufacturing process are also known in the art. However, such kind of robots are expensive and impose additional tasks to train and maintain.

### Description of the Invention

The present invention aims to provide a machine for transferring sausages from a first conveyor belt that is able to operate continuously and reliably, without damaging the sausages and meeting all regulations with regard to food safety. In particular, according to a first aspect, the present invention relates to a machine for transferring sausages of a certain diameter from a first conveyor belt to a second conveyor belt, as defined in claim 1, that comprises: a first conveyor belt for advancing a plurality of sausages in parallel arrangement, adjacent to each other, in a first advance direction at a first advance speed; a second conveyor belt arranged substantially contiguous to the first conveyor belt and being configured to receive the plurality of sausages from the first conveyor belt and to advance the plurality of sausages in a second advance direction at a second advance speed; a transfer unit for transferring the plurality of sausages from the first conveyor belt to the second conveyor belt; wherein the transfer unit comprises: one or more transfer belts; each transfer belt being an endless conveyor belt arranged above the second conveyor belt and at least partially facing it, each transfer belt defining at a bottom part a transfer surface extending parallel to an upper surface of the second conveyor belt and spaced apart from it at a distance substantially equal to the diameter of the sausages; said transfer surface being configured to contact an upper region of the plurality of sausages coming from the first conveyor belt and drag them to the second conveyor belt.

With the transfer unit of the machine according to the first aspect of the present invention the sausages are accompanied and driven from the first conveyor belt to the second conveyor belt. In the present invention, the transfer of sausages between the first and the second conveyor belts does not depend on the action of gravity and, therefore, it is possible to control the transfer of sausages in a more detailed manner, since it is easier to control the transfer speed, the number of sausages transferred simultaneously, etc. by simply modifying the operating parameters of the transfer unit. In transfer units known in the art whose operation is based on the action of gravity, the transfer speed, among other variables, are limited and cannot be modified, at least not in a simple and efficient manner.

According to the first aspect of the present invention, the transfer surface may also partially face the first conveyor belt, that is to say, a part of the transfer surface may face the first conveyor belt and another part of the transfer surface may face the first conveyor belt.

According to the first aspect of the present invention, the transfer unit may further comprise a motor driven shaft; one or more pulleys fixed to the motor driven shaft; each pulley being configured to drive a transfer belt upon rotation of the motor driven shaft.

According to the first aspect of the present invention, the one or more transfer belts may be toothed belts having teeth, on an engaging side thereof, that fit into grooves on the one or more pulleys. However, other types of belts may be used as transfer belts.

According to the first aspect of the present invention, the transfer unit may further comprise one or more tensioning rollers for the one or more transfer belts; said one or more tensioning rollers being configured to tension the one or more transfer belts. The tensioning roller ensures that the corresponding transfer belt has a certain optimal tension that ensures optimum performance of the transfer belt.

According to the first aspect of the present invention, the second advance speed of the second conveyor belt and the advance speed of the one or more transfer belts is the same, or at least, substantially the same. This prevents or reduces shear forces acting on the upper region and on the lower region of the sausage.

According to the first aspect of the present invention, the transfer unit may further comprise a transfer element arranged substantially contiguous to the first conveyor belt and to the second conveyor belt.

According to the first aspect of the present invention, the transfer element may comprise extensions that extend towards the first conveyor belt and/or the second conveyor belt.

According to the first aspect of the present invention, the first conveyor belt may comprise a plurality of contiguous individual compartments defined by walls, each individual compartment being configured to receive a corresponding sausage.

According to the first aspect of the present invention, the walls defining the individual compartments may have cutouts aligned with said extensions so that the extensions pass through them.

According to the first aspect of the present invention, the first conveyor belt and the second conveyor belt may be coplanar. However, this is not necessary and, for example, the first conveyor belt may have a small inclination.

According to the first aspect of the present invention, the first conveyor belt and the second conveyor belt may be symmetrical in respect of a longitudinal axis thereof.

According to the first aspect of the present invention, wherein the transfer unit may be height adjustable.

According to the first aspect of the present invention, the transfer unit may be supported by a support. Preferably, the support comprises a fixed part fixed to the machine and a movable part, supporting the motor driven shaft and the elements attached thereto, movably fixed to the fixed part, so that the distance between the transfer surface of the one or more transfer belts and the upper surface of the second conveyor belt can be adjusted.

In the present document, a fixed part should be understood as a part envisaged to be at a constant position relative to the rest of the static elements of the machine. In contrast, a movably fixed part should be understood as a part envisaged to operate at a certain position relative to the rest of the static elements of the machine, but whose operation position is also envisaged to be adjustable within a certain range, for example, to adapt to different operation conditions of the machine.

According to the first aspect of the present invention, the transfer belt may be made of polyurethane. However, other suitable materials are also possible.

According to the first aspect of the present invention, the transfer belt may have a Shore A hardness from 65 to 90. Preferably, the transfer belt has a Shore A hardness from 70 to 85. Both endpoints are included in the aforementioned ranges. However, it is also possible that the transfer belt has a Shore A hardness outside of the aforementioned ranges.

According to the first aspect of the present invention, the first advance direction and the second advance direction may be equal.

According to a second aspect of the present invention, it is also disclosed a method for transferring sausages of a certain diameter from a first conveyor belt to a second conveyor belt, the method comprising the steps of: providing a machine for transferring sausages of a certain diameter from a first conveyor belt to a second conveyor belt according to the first aspect of the present invention; providing a plurality of sausages in parallel arrangement, adjacent to each other, to the first conveyor belt; driving the one or more sausages to a transfer region of the first conveyor belt; and dragging the plurality of sausages from the transfer region of the first conveyor belt to a receiving region of the second conveyor belt with the transfer unit of the machine.

According to the second aspect of the present invention, the method may further comprise the step of driving the plurality of sausages with the second conveyor belt away from its receiving region.

According to a third aspect of the present invention, it is further disclosed a system for forming and transferring batches of sausages, the system comprising: a machine for transferring sausages of a certain diameter from a first conveyor belt to a second conveyor belt according to the first aspect of the present invention; a third conveyor belt arranged above the second conveyor belt and configured to advance in a third advance direction at a third advance speed, said third advance direction being parallel to the second advance direction, said third conveyor belt comprising a plurality of spaced apart paddles configured for creating batches of sausages from the plurality of sausages arranged on the second conveyor belt; said second conveyor belt being a retractable conveyor belt and being configured to retract towards a retracting direction being opposite to the second advance direction; and wherein the spaced apart paddles of the third conveyor belt are configured to act as a stop of the batches of sausages in the retracting direction while the second conveyor belt retracts, so that the batches of sausages fall into an inferior level.

The system according to the third aspect of the present invention allows to create batches of sausages that, for example, can subsequently be collected or packaged, from a stream of sausages coming, for example, from a sausage feeding conveyor belt, in a relatively simple and efficient manner.

According to the third aspect of the present invention, the system may further comprise a sausage loading unit, which comprises: a carriage movable along the first conveyor belt; a sausage discharge unit for placing sausages on the first conveyor belt; a sausage feeding conveyor belt for feeding sausages to the sausage discharge unit; wherein the carriage is configured to synchronize with the advance speed of the first conveyor belt so that sausages are placed on the first conveyor belt in a substantially contiguous manner in parallel arrangement, adjacent to each other.

According to the third aspect of the present invention, the sausage discharge unit may be configured to transfer sausages from the sausage feeding conveyor belt to the first conveyor belt; said sausage discharge unit may be supported by the carriage movable along the first conveyor belt and configured to synchronize with the advance speed of the first conveyor belt so that the sausages are placed on the first conveyor belt in a substantially contiguous manner in parallel arrangement, adjacent to each other; the sausage discharge unit may comprise a rotating disc at least partially surrounded by a guiding element, the rotating disc together with the guiding element defining a guiding channel of a predetermined width for driving the sausages from the sausage feeding conveyor belt to the first conveyor belt; said rotating disc may be driven by a driving unit comprising an electric motor; and said electric motor may be arranged at a fixed position of the automatic machine for transferring sausages to a conveyor belt.

When compared to other machines known in the art, sausage discharge units comprising a rotating disc provide greater performance than discharge units of other kind.

According to the third aspect of the present invention, the electric motor may be operatively connected to the rotating disc by a first belt.

According to the third aspect of the present invention, the first belt may be arranged substantially parallel to the first conveyor belt.

According to the third aspect of the present invention, the first belt may drive a first shaft that drives a second belt configured to drive the rotating disc.

According to the third aspect of the present invention, the electric motor may rotate at a certain rotational speed and the automatic machine may further comprise a control unit configured to adjust the rotational speed of the electric motor so the rotating disc rotates at a substantially constant rotational speed.

According to the third aspect of the present invention, the second belt may be configured to act as the guiding element, that is to say, the second belt may drive the rotating disc as well as, together with said rotating disc, define the guiding channel of a predetermined with that drives the sausages from the sausage feeding conveyor belt to the first conveyor belt.

According to the third aspect of the present invention, the sausage discharge unit may comprise a curved wall configured to act as the guiding element, that is to say, the guiding channel of a predetermined with for driving sausages from the sausage feeding conveyor belt to the first conveyor belt may be defined by the rotating disc and said curved wall.

According to the third aspect of the present invention, the sausage discharge unit may comprise a sausage guide for guiding sausages to the first conveyor belt.

According to the third aspect of the present invention, the sausage feeding conveyor belt may be a V-shaped conveyor belt. However, other types of conveyor belts are also possible.

According to the third aspect of the present invention, the sausage feeding conveyor belt may be substantially parallel to the first conveyor belt.

According to the third aspect of the present invention, the sausage feeding conveyor belt may comprise two or more sections that operate in a coordinated manner.

According to the third aspect of the present invention, the system may further comprise an automatic packaging unit arranged for collecting and packaging the batches of sausages at the inferior level. Preferably, the packaging unit is configured to place a plurality of trays in an aligned configuration underneath the second conveyor belt; said second conveyor belt and said third conveyor belt being configured so that a corresponding plurality of batches of sausages is arranged above the corresponding tray aligned with it, so that when the second conveyor belt retracts each batch of sausages falls into the corresponding tray.

According to the third aspect of the present invention, the system may further comprise an aligning unit for aligning the plurality of sausages in parallel arrangement, on the first conveyor belt, the aligning unit comprising an oscillating inclined plane arranged in a convergent manner.

According to the third aspect of the present invention, the paddles of the third conveyor belt may be arranged perpendicular to it and to the third advance direction.

According to the third aspect of the present invention, the first advance direction and the second advance direction may be equal.

According to the third aspect of the present invention, the second advance direction and the third advance direction may be equal.

The advance direction of a conveyor belt should be understood as the line or course on which the surface of said conveyor belt is in contact, or intended to be in contact, with the sausages is moving or is aimed to move.

In the present document, "include, comprise, contain, have, etc." are used as synonyms and do not exclude additional, unrecited elements or steps, unless explicitly stated otherwise. On the other hand, the wording "consists of" excludes additional, unrecited elements or steps.

Also, terms of position and location relative to a global reference frame, such as "above" and "below," are used to assist with describing the embodiments depicted in the drawings, however such terms are not intended to limit the embodiments or claims to structures having a particular global orientation, unless explicitly stated otherwise.

This description and the appended claims also refer to various physical measurements and dimensional properties. It will be understood that essentially all measurements are subject to ranges of error as a result of environmental conditions and typical variations in instrument precision, and all manufactured parts are subject to variations in dimension as a result of typical manufacturing tolerances. Thus, all dimensions and measurements used in herein will be understood to be approximate, but within a range of typical variations, as will be understood by persons of ordinary skill in the art in view of the disclosure herein. It will be understood that references to geometric position, such as parallel, perpendicular, tangent, etc. allow deviations up to ± 5° from the theoretical position defined by this nomenclature. It will also be understood that any range of values given may not be optimal in extreme values and may require adaptations of the invention to these extreme values are applicable, such adaptations being within reach of a skilled person.

### Brief description of the Figures

The foregoing and other advantages and features will be more fully understood from the following detailed description of exemplary embodiments with reference to the accompanying drawings, to be taken in an illustrative and non-limitative manner, in which:
FIG. 1 shows a perspective view of an exemplary embodiment a machine for transferring sausages of a certain diameter from a first conveyor belt to a second conveyor belt according to the first aspect of the present invention.
FIG. 2 shows a detail perspective view the exemplary embodiment of a machine for transferring sausages shown in FIG. 1.
FIG. 3 shows a detail perspective view of an exemplary embodiment of a system for forming and transferring batches of sausages according to the third aspect of the present invention.
FIG. 4 shows a detail section view of the exemplary embodiment of a machine for transferring sausages shown in FIGS. 1 and 2.
FIG. 5 shows a detail perspective view of the transfer unit of the exemplary embodiment of a machine for transferring sausages shown in FIGS. 1, 2 and 4.
FIG. 6 shows a section view of the transfer unit shown in FIG. 5.

### Detailed Description of the Invention and of particular embodiments

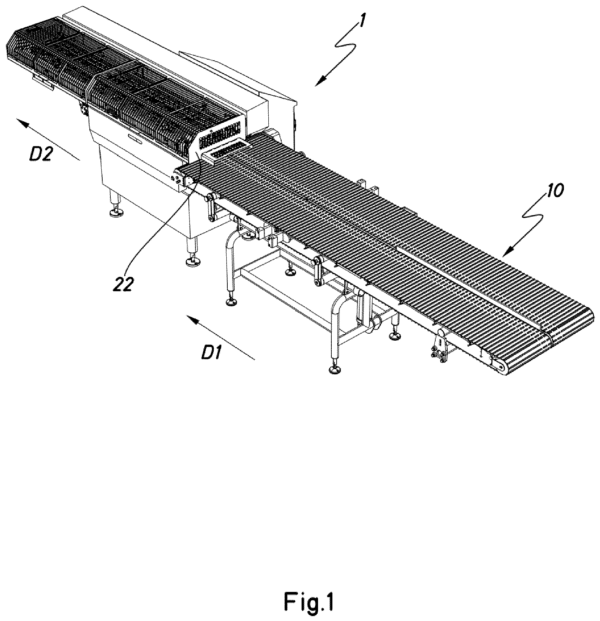

In FIG. 1 can be seen a perspective view of an exemplary embodiment of a machine 1 for transferring sausages 100 of a certain diameter from a first conveyor belt 10 to a second conveyor belt 20 according to the present invention.

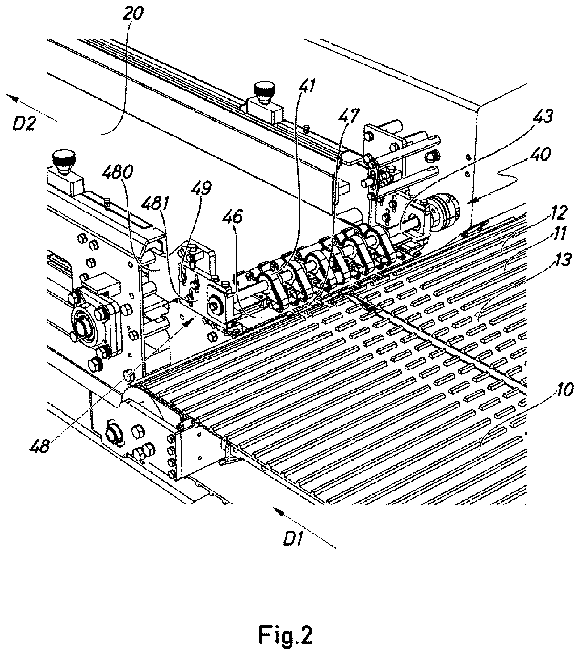

In FIG. 1 the machine 1 is depicted with a protective cover 22 of the second conveyor belt 20 and, thus, the second conveyor belt 20 is not visible. The second conveyor belt 20 can be seen, for example, in FIG. 2. The protective cover 22 of this exemplary embodiment is hinged so that it is possible to have access to the second conveyor belt 20 and other elements therein. In other embodiments this may be different, although preferably the protective cover 22 is removable or openable.

The machine 1 of this exemplary embodiment comprises a double first conveyor belt 10, i.e. a first conveyor belt 10 having two segments arranged parallel one another, because it is intended to by supplied with sausages 100 by two production lines. However, in other embodiments the first conveyor belt 10 can be a single conveyor belt supplied with sausages 100 by a single production line. It is also possible, in other embodiments, that the first conveyor belt 10 has more than two segments intend to be supplied with sausages 100 by more than two production lines. In other words, the machine 1 according to the present invention can comprise one or more production lines operating in a parallel arrangement.

Unless explicitly stated otherwise, what is described in the context of this exemplary embodiment with a double first conveyor belt 10 is also applicable to other embodiments having a single first conveyor belt 10; i.e. a first conveyor belt 10 having a single segment; or a multi segment first conveyor belt 10.

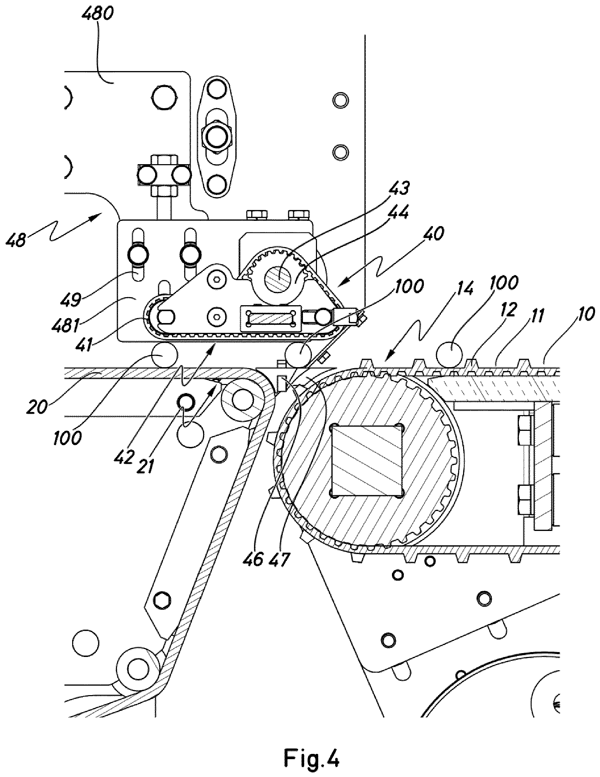

In this exemplary embodiment, the double first conveyor belt 10 and the second conveyor belt 20 are arranged symmetrically with respect to a longitudinal axis thereof. Additionally, as can be seen in greater detail in, for example, FIG. 4, the first and second conveyor belts 10, 20 are coplanar. However, in other embodiments this may be different.

The first advance direction D1 of the first conveyor belt 10 and the second advance direction D2 of the second conveyor belt 20 have also been depicted in FIG. 1. As can be seen, in this exemplary embodiment, the first advance direction D1 and the second advance direction D2 follow the same direction, i.e. are equal.

FIG. 2 shows a detail perspective view of the exemplary embodiment of a machine 1 for transferring sausages 100 shown in FIG. 1 with the protective cover 22 of the second conveyor belt 20 removed, so that it is possible to see the elements under it that are hidden in FIG. 1.

By removing the protective cover 22, the transfer unit 40 and the second conveyor belt 20 of this exemplary embodiment of a machine 1 for transferring sausages 100 can clearly be seen. In this exemplary embodiment, the transfer unit 40 comprises six transfer belts 41 arranged symmetrically with respect to the longitudinal axis defined by the double first conveyor belt 10 and the second conveyor belt 20. In the configuration of this exemplary embodiment, a first group of three transfer belts 41 is arranged to transfer the sausages 100 coming from a first segment of the first conveyor belt 10 and a second group of three transfer belts 41 is arranged to transfer the sausages 100 coming from a second segment of the first conveyor belt 10. In embodiments having a single first conveyor belt 10, in other words, a first conveyor belt 10 with a single segment, the transfer unit 40 may comprise three transfer belts 41. However, a single transfer belt 41 may also suffice. At least one transfer belt 41 is necessary, but the exact number of transfer belts 41 depends on the type of sausage 100, its size, speed of transfer, etc. The width of each transfer belt 41 may also vary depending on the sausages 100 that are to be transferred from the first conveyor belt 10 to the second conveyor belt 20. The transfer unit 40 is designed so that its motor driven shaft 43, together with its transfer belts 41, can be easily replaced by another one with a different configuration in case the machine 1 is to be operated with a different product, under different operation conditions, etc.

In this exemplary embodiment, the transfer unit 40 is height adjustable so that the distance between the transfer belts 41 and the second conveyor belt 20 can be adjusted to adapt to sausages 100 of different sizes, in particular different diameters. More precisely, the height adjustable transfer unit 40 allows to adjust the distance between an upper surface of the second conveyor belt 20 and a transfer surface 42 of the transfer belts 41 (for more detail, see, for example, FIG. 4). In order to be height adjustable, in this exemplary embodiment the transfer unit 40 is supported by a support 48 that has two parts. A first fixed part 480 is fixed to the machine 1, preferably to a static and robust part thereof, and a second movable part 481, that supports the motor driven shaft 43 and the elements attached thereto (transfer belts 41, pulleys 44, tensioning rollers 45, etc.), movably fixed to the fixed part 480. In particular, in this exemplary embodiment, the movable part 481 is fixed to the fixed part 480 by screws or similar through slotted holes 49 in the movable part 481, so that the relative position of the movable part 481 relative to the fixed part 480 can be adjusted, thereby adjusting the distance between the transfer surface 42 of the transfer belts 41 and the upper surface of the second conveyor belt 20.

This detail view shows that the first conveyor belt 10 of this exemplary embodiment comprises a plurality of individual compartments 11 adjacent to each other (see, for example, 4). Said individual compartments 11 are preferably perpendicular to the first advance direction D1. In other embodiments of a machine 1 for transferring sausages 100 according to the present invention, the first conveyor belt 10 can be flat or smooth, that is to say, the first conveyor belt can lack said individual compartments 11. Having individual compartments 11 is advantageous, at least, because it restricts the movement of the sausages 100 in the longitudinal direction of the first conveyor belt 10. Restricting the movement of the sausages 100, aids, for example, in creating batches. In this exemplary embodiment the individual compartments 11 are defined by walls 12 perpendicular to the surface of the first conveyor belt 10, although in other embodiments having individual compartments 11, such compartments 11 may have a different configuration.

The exemplary embodiment shown comprises a transfer element 46 located between the first conveyor belt 10 and the second conveyor belt 20 arranged substantially contiguous to both of them. The transfer element 46 of this exemplary embodiment comprises extensions 47 that extend towards the first conveyor belt 10. The walls 12 defining the individual compartments 11 have cutouts 13 aligned with said extensions 47 so that the extensions 47 pass through them. By having the cutouts 13 in the walls 12, it is possible to arrange the transfer element 46 and its extensions 47 closer to the first conveyor belt 10.

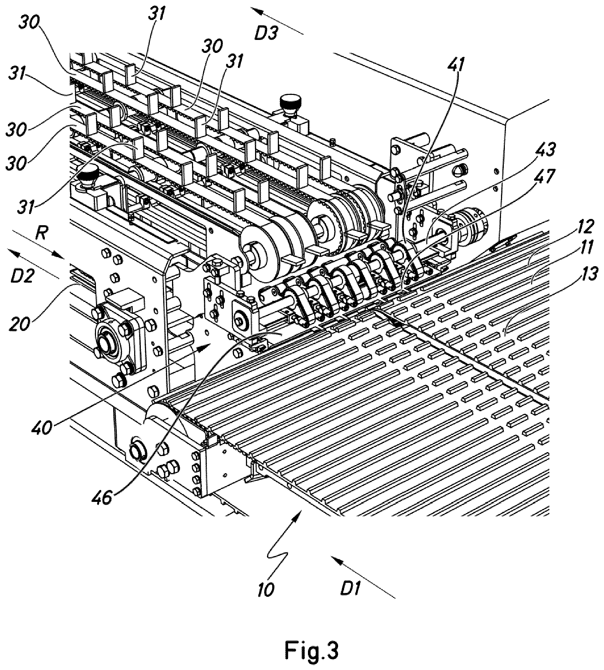

FIG. 3 shows a detail perspective view of an exemplary embodiment of a system 2 for forming and transferring batches of sausages 100 according to the present invention. When compared with the exemplary embodiment of a machine 1 for transferring sausages 100 of a certain diameter from a first conveyor belt 10 to a second conveyor belt 20 shown and described in the context of FIGS. 1 and 2, this exemplary embodiment of a system 2 for forming and transferring batches of sausages 100, is based on the exemplary embodiment of a machine 1 and adds a third conveyor belt 30 arranged above the second conveyor belt 20. Additionally, when compared with the machine 1 described in the context of FIGS. 1 and 2, the second conveyor belt 20 of this exemplary embodiment of a system 2 for forming and transferring batches of sausages 100 is a retractable conveyor belt and is configured to retract towards a retracting direction R being opposite to the second advance direction D2. In a machine 1 for transferring sausages 100 according to the present invention, the second conveyor belt 20 may be retractable or not. Although it is not shown, the exemplary embodiment of a system 2 shown, also comprises a sausage loading unit. Other embodiments may lack it.

The sausage loading unit may comprise a carriage movable along the first conveyor belt 10, a sausage discharge unit for placing sausages 100 on the first conveyor belt 10, and a sausage feeding conveyor belt for feeding sausages 100 to the sausage discharge unit. Said carriage is preferably configured to synchronize with the advance speed of the first conveyor belt 10 so that sausages 100 are placed on the first conveyor belt 10 in a substantially contiguous manner in parallel arrangement, adjacent to each other. In particular, the sausage discharge unit may be configured to transfer sausages 100 from the sausage feeding conveyor belt to the first conveyor belt 10 and the sausage discharge unit may be supported by the carriage movable along the first conveyor belt 10 and configured to synchronize with the advance speed of the first conveyor belt 10 so that the sausages 100 are placed on the first conveyor belt 10 in a substantially contiguous manner in parallel arrangement, adjacent to each other. The sausage discharge unit may comprise a rotating disc at least partially surrounded by a guiding element, the rotating disc together with the guiding element defining a guiding channel of a predetermined width for driving the sausages 100 from the sausage feeding conveyor belt to the first conveyor belt 10. The rotating disc may be driven by a driving unit comprising an electric motor and said electric motor may be arranged at a fixed position of the automatic machine for transferring sausages to a conveyor belt. That is to say, the electric motor may not move together with any component of the system 2 and, in particular, may not move together with the sausage discharge unit. This provides for a smooth operation of the sausage discharge unit as the mass of the sausage discharge unit is greatly reduced by not having the electric motor that drives the rotating disc attached to it. In addition to a reduced mass, the claimed sausage discharge unit also has a low centre of gravity, which also improves the dynamics of the sausage discharge unit. The reduced mass and the improved centre of gravity of the sausage discharge unit lead to a lower inertia of the sausage discharge unit, so that it operates smoothly and with less vibrations, which results in an increased lifespan as the mechanical stress of its components is reduced, when compared to other sausage discharge units known in the art.

Once the sausages 100 on the first conveyor belt 10 reach a transfer region 14 thereof, the sausages 100 are transferred, by the transfer unit 40, to the second conveyor belt 20 which is configured to receive the plurality of sausages 100 from the first conveyor belt 10 and to advance the plurality of sausages 100 in a second advance direction D2 and at a second advance speed. As the plurality of sausages 100 are transferred to the second conveyor belt 20, said plurality of sausages 100 are separated into batches of sausages 100 by paddles 31 of the third conveyor belt 30. Said batches of sausages 100 advance along the second conveyor belt 20 together with the third conveyor belt 30, and, in particular, together with the paddles 31 of the third conveyor belt 30 that delimit' the corresponding batch. By advancing synchronously, the batches of sausages 100 are protected as otherwise the batches would rub against the paddles 31 and drag them, thereby damaging, or at least risking to damage, the sausages 100.

In this particular exemplary embodiment shown, the third conveyor belt 30 is a quadruple conveyor belt, wherein a first pair of segments of the third conveyor belt 30 are configured to act on the sausages 100 coming from the first segment of the first conveyor belt 10 and a second pair of segments of the third conveyor belt 30 are configured to act on the sausages coming from the second segment of the first conveyor belt 10. In other embodiments, the third conveyor belt 30 may have a different configuration than the one shown. For example, may be a double third conveyor belt 30 or a single third conveyor belt 30. The number of third conveyor belts 30 depends, for example, on the number of production lines of the machine 1 or of the system 2, on the properties of the sausages 100, etc.

After the batches of sausages 100 reach a discharging position, the second conveyor belt 20, which in this exemplary embodiment is a retractable conveyor belt, retracts towards a retracting direction R that is opposite to the second advance direction D2, so that batches of sausages 100 on the second conveyor belt 20 fall into an inferior level, wherein they are preferably collected.

Besides aiding in transferring the sausages 100 from the first conveyor belt 10 to the second conveyor belt 20, the transfer unit 40, acting in cooperation with the paddles 31 of the third conveyor belt 30, also aids in creating the batches of sausages 100 on the second conveyor belt 20. The paddles 31 of the third conveyor belt 30 are spaced apart a distance such that a batch of a certain number of sausages 100 is created between consecutive paddles 31. The number of sausages 100 in a batch depends on the distance between paddles. Therefore, the third conveyor belt 30, together with its paddles 31, is preferably replaceable so that batches with a different number of sausages 100 can be created by simply replacing the third conveyor belt 30 with another one wherein the distance between paddles 31 is different. Alternatively, it is also envisaged a third conveyor belt 30 having removable paddles 31 so that they can be removed from the third conveyor belt 30 and reattached to it separated by a different distance, in case the number of sausages 100 in a batch needs to differ from a previous configuration.

Preferably, when the second conveyor belt 20 is fully loaded with batches of sausages 100 along its entire length, said batches of sausages 100 are ready to be dropped to an inferior level, in this case, to the trays of a packaging unit (not shown). As the second conveyor belt 20 cannot accommodate more batches, the first conveyor belt 10 stops its operation. When the operation of the first conveyor belt 10 is stopped, the carriage of the sausage loading unit preferably returns the sausage discharge unit to its initial or resting position, as, depending on the interval between sausages 100 coming from the sausage feeding conveyor belt and on the advance speed of the first conveyor belt, the carriage may be closer to the transfer region 14 or to a loading region of said first conveyor belt 10. While the carriage and the sausage discharge unit return to its initial position, the sausage discharge unit may continue to place sausages 100 on the first conveyor belt 10. However, the sausage discharge unit may also stop placing sausages 100 on the first conveyor belt 10 until the batches of sausages 100 are unloaded from the second conveyor belt 20 and operation of the first and second conveyor belts 10, 20 is resumed.

Before beginning the unloading of the batches of sausages 100, the third conveyor belt 30 locks its position, so that the paddles 31 can act as a stop of the sausages 100 of the batches.

As the belt of the second conveyor belt 20 retracts, the paddles 31 of the third conveyor belt 30 act as a stop of the batches of sausages 100, which fall into an inferior level wherein, in this exemplary embodiment, trays of a packaging unit are located. The packaging unit (not shown), of this exemplary embodiment, places the trays aligned in rows so that each tray is placed directly underneath the corresponding batch of sausages 100, so that when the sausages 100 fall once the belt has been retracted past its location, the sausages 100 fall into the corresponding tray.

Once the trays are loaded with the corresponding sausages 100, after the second conveyor belt 20 has reached its fully retracted position, the packaging unit can move the rows of trays in an advance direction so that the subsequent row of trays is placed underneath the second conveyor belt 20 and the loaded trays proceed with its packaging. Once the row of trays is loaded with the corresponding sausages 100, the system 2 is ready to resume its operation. In order to do so, the first conveyor belt 10 and the sausage loading unit resume its operation thereby providing sausages 100 to the second conveyor belt 20 that advances to its extended position while batches of sausages 100 are being created on it by the paddles 31 of the third conveyor belt 30.

The operation of the system 2 and, in particular, of the second and third conveyor belts 20, 30 has been described in cooperation with a packaging unit. However, it should be understood that the operation would be equivalent in embodiments lacking a packaging unit, wherein the batches of sausages 100 fall into an inferior level, wherein they are preferably collected. In said inferior level there may be a further conveyor belt, a support surface, a cooking appliance, etc.

It should be understood that the first, second and third conveyor belts 10, 20, 30 are driven by corresponding properly controlled motors, even though they are not depicted in the drawings.

FIG. 4 shows a detail section view of the exemplary embodiment of a machine 1 for transferring sausages 100 previously shown in FIGS. 1 and 2.

In the transfer unit 40 of the exemplary embodiment shown the transfer belts 41 are endless conveyor belts arranged above the second conveyor belt 20 and at least partially facing it. In the case shown, the transfer belts 41 also face the transfer element 46 and partially the first conveyor belt 10, in particular, the transfer region 14 thereof. The transfer belts 41 define, at a bottom part thereof, a transfer surface 42 extending parallel to an upper surface of the second conveyor belt 20 and spaced apart from it a distance substantially equal to the diameter of the sausages 100. The transfer surface 42 of the transfer belts 41 is configured to contact an upper region or portion of the sausages 100 coming from the first conveyor belt 10 and drag them to the second conveyor belt 20.

To ease the understanding of the functioning of the machine 1 and the parts thereof, in FIG. 4 three sausages 100 have been depicted. One on the first conveyor belt 10, one on the transfer element 46 and another one on the second conveyor belt 20 at the end of the transfer surface 42 of the transfer unit 40. The position of these sausages 100 has been chosen for illustrative purposes and in real operation of the machine 1 the sausages 100 may not be in a relative position as shown in the drawing.

A sausage 100 placed into one individual compartment 11 of the first conveyor belt 10 travels towards the second conveyor belt 20 following a first advance direction D1 (see, for example, FIG. 2) until it reaches the transfer region 14 of the first conveyor belt 10. Said transfer region 14 is the one proximal to the second conveyor belt 20 and, in this exemplary embodiment, also proximal to the transfer element 46.

Due to the inertia given to the sausage 100 by the first conveyor belt 10, upon reaching the transfer region 14, in this first exemplary embodiment moves towards the extensions 47 of the transfer element 46 and then to the transfer element 46 as such. While this happens, the upper portion of the sausage 100 comes into contact with the transfer surface 42 of the transfer belt 41, which begins to drag and accompany the sausage 100 towards the second conveyor belt 20. As all the transfer belts 41 in the transfer unit 40 are driven by the same motor driven shaft 43, all transfer belts 41 operate synchronously. An asynchronous operation of different transfer belts 41 dragging a particular sausage 100, could result in damage or even breakage of the sausage 100.

Past the transfer element 46, the sausages 100 reach the receiving region 21 of the second conveyor belt 20 and keep advancing due to the movement of the one or more transfer belts 41 and the second conveyor belt 20. Even if the second conveyor belt 20 was static, i.e. not in operation, the sausages 100 would still be able to advance thanks to the impulse provided by the one or more transfer belts 41.

In order to prevent, or at least greatly reduce, shear stress on the upper and lower region of the sausages 100, the second advance speed of the second conveyor belt 20 and the advance speed of the transfer belts 41 is, preferably, substantially the same.

The distance between the transfer surface 42 of the transfer belt 41 and the upper surface of the second conveyor belt 20 is substantially equal to the diameter of the sausages 100. If this distance is smaller than the diameter of the sausages 100, said sausages may get stuck between the transfer belt 41 and the second conveyor belt 20, or may be damaged due to compression by the second conveyor belt 20 and the transfer belt 41. On the other hand, if the distance between the transfer surface 42 and the upper surface of the second conveyor belt 20 is greater than the diameter of the sausages 100, the transfer belt 41 will not be able to act on the upper region of the sausages 100 and the machine 1 will operate as it would without the transfer unit 40. In this exemplary embodiment, the distance between the transfer surface 42 of the transfer belts 41 and the upper surface of the second transfer belt 20 can be adjusted by moving the movable part 481 of the support 48, up and down, thanks to the slotted holes 49 in the movable part 481.

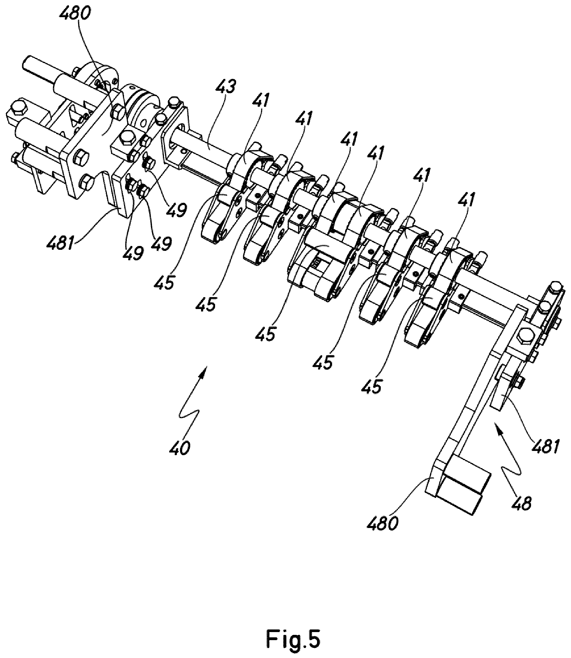

FIG. 5 shows a perspective view of the transfer unit 40 of the exemplary embodiment of a machine 1 for transferring sausages shown in FIGS. 1, 2 and 4. In this exemplary embodiment, the transfer unit 40 comprises six transfer belts 41 that operate in two groups of three transfer belts 41 each, one group for each segment of the first transfer belt 10 (see, for example, FIG. 2). In other embodiments, the number of transfer belts 41, as well as the width of each transfer belt 41, the separation between consecutive transfer belts 41, etc. may differ depending on the properties of the sausages 100 to be transferred and on the operation conditions of the machine (for example, speed of transfer, production rate, etc.).

The perspective view of FIG. 5 clearly shows the tensioning rollers 45 configured to tension the corresponding transfer belts 41. As can be seen, in this exemplary embodiment each transfer belt 41 has a tensioning roller 45, although two transfer belts 41 share the same tensioning roller 45. In particular, in this exemplary embodiment, the proximal transfer belts 41 of each group of three transfer belts 41 (see explanation above), share the same tensioning roller 45. In other embodiments, each transfer belt 41 may have a corresponding individual tensioning roller 45 or even all transfer belts 41 may share a single tensioning roller 45 acting on all transfer belts 41. The tensioning rollers 45 maintain the transfer belts 41 with a predetermined tension so that it operates as intended. Said predetermined tension may vary depending on the operation conditions of the machine 1 and of the transfer unit 40.

The perspective view of FIG. 5 also shows the support 48 of the transfer unit 40, as well as its fixed part 480 and its movable part 481. As previously stated, in this exemplary embodiment the movable part 481 is fixed to the fixed part 480 by screws through the slotted holes 49, so that the height of the transfer unit 40 can easily be adjusted. This union between the fixed part 480 and the movable part 481 also allows easy replacement of the movable part 481 and the motor driven shaft 43 and the other elements attached to it. This replacement can be done, for example, for maintenance or to substitute the motor driven shaft 43 and the tensioning rollers 45 with others of a different configuration, for example, in case of change of the type of sausages 100 to be transferred.

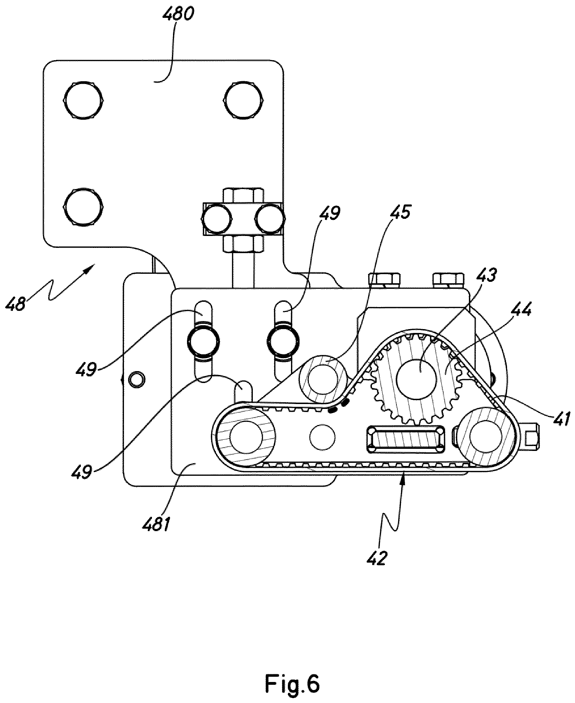

A more detailed representation of the elements of the transfer unit 40 can be seen in FIG. 6 that shows a section view of the transfer unit 40 shown in FIG. 5. As can be seen, in this exemplary embodiment, the transfer belts 41 are toothed belts having teeth, on an engaging side thereof, that fit into grooves on the corresponding pulleys 44. The pulleys 44 are fixed to the motor driven shaft 43 that drive all pulleys 44, and thus, all transfer belts 41 synchronously. In other embodiments, the transfer belts 41 may be of a different type, for example, V-belts, flat belts, etc.

In this exemplary embodiment, the transfer belts 41 are made of polyurethane with a Shore A hardness from 70 to 85. However, in other embodiments the transfer belts 41 may be made of other suitable materials and may have a different hardness than the one previously mentioned.

Unless otherwise provided, features described in relation to a certain exemplary embodiment are also applicable to other embodiments of the present invention.

It will be understood that various parts of one embodiment of the invention can be freely combined with parts described in other embodiments, even being said combination not explicitly described, provided that such combination is within the scope of the claims and that there is no harm in such combination.

## Claims

1. Machine (1) for transferring sausages (100) of a certain diameter from a first conveyor belt (10) to a second conveyor belt (20), the machine comprising:
- a first conveyor belt (10) for advancing a plurality of sausages (100) in parallel arrangement, adjacent to each other, in a first advance direction (D1) at a first advance speed;
- a second conveyor belt (20) arranged substantially contiguous to the first conveyor belt (10) and being configured to receive the plurality of sausages (100) from the first conveyor belt (10) and to advance the plurality of sausages (100) in a second advance direction (D2) at a second advance speed;
- A transfer unit (40) for transferring the plurality of sausages (100) from the first conveyor belt (10) to the second conveyor belt (20);
**characterized in that** the transfer unit (40) comprises:
- one or more transfer belts (41); each transfer belt (41) being an endless conveyor belt arranged above the second conveyor belt (20) and at least partially facing it; each transfer belt (41) defining, at a bottom part, a transfer surface (42) extending parallel to an upper surface of the second conveyor belt (20) and spaced apart from it at a distance substantially equal to the diameter of the sausages (100); said transfer surface (42) being configured to contact an upper region of the plurality of sausages (100) coming from the first conveyor belt (10) and drag them to the second conveyor belt (20).

2. Machine (1), according to claim 1, wherein the transfer surface (42) also partially faces the first conveyor belt (10).

3. Machine (1), according to claim 1 or 2, wherein the transfer unit (40) further comprises a motor driven shaft (43); one or more pulleys (44) fixed to the motor driven shaft (43); each pulley (44) being configured to drive a transfer belt (41) upon rotation of the motor driven shaft (43).

4. Machine (1), according to claim 3, wherein the one or more transfer belts (41) are toothed belts having teeth, on an engaging side thereof, that fit into grooves on the one or more pulleys (44).

5. Machine (1), according to any one of the preceding claims, wherein the transfer unit (40) further comprises one or more tensioning rollers (45) for the one or more transfer belts (41); said one or more tensioning rollers (45) being configured to tension the one or more transfer belts (41).

6. Machine (1), according to any one of the preceding claims, wherein the transfer unit (40) further comprises a transfer element (46) arranged substantially contiguous to the first conveyor belt (10) and to the second conveyor belt (20).

7. Machine (1), according to claim 6, wherein the transfer element (46) comprises extensions (47) that extend towards the first conveyor belt (10) and/or the second conveyor belt (20).

8. Machine (1), according to any one of the preceding claims, wherein the first conveyor belt (10) comprises a plurality of contiguous individual compartments (11) defined by walls (12), each individual compartment (11) being configured to receive a corresponding sausage (100).

9. Machine (1), according to claims 7 and 8, wherein the walls (12) defining the individual compartments (11) have cutouts (13) aligned with said extensions (47) so that the extensions (47) pass through them.

10. Machine (1), according to any one of the preceding claims, wherein the first conveyor belt (10) and the second conveyor belt (20) are coplanar.

11. Machine (1), according to any one of the preceding claims, wherein the transfer unit (40) is supported by a support (48) that comprises a fixed part (480) fixed to the machine (1) and a movable part (481), supporting the motor driven shaft (43) and the elements attached thereto, movably fixed to the fixed part (480), so that the distance between the transfer surface (42) of the one or more transfer belts (41) and the upper surface of the second conveyor belt (20) can be adjusted.

12. Method for transferring sausages (100) of a certain diameter from a first conveyor belt (10) to a second conveyor belt (20), the method comprising the steps of:
- providing a machine (1) for transferring sausages (100) of a certain diameter from a first conveyor belt (10) to a second conveyor belt (20) according to any one of claims 1 to 11;
- providing a plurality of sausages (100) in parallel arrangement, adjacent to each other, to the first conveyor belt (10);
- driving the one or more sausages (100) to a transfer region (14) of the first conveyor belt (10); and
- dragging the plurality of sausages (100) from the transfer region (14) of the first conveyor belt (10) to a receiving region (21) of the second conveyor belt (20) with the transfer unit (40) of the machine (1).

13. System (2) for forming and transferring batches of sausages (100), the system (2) comprising:
- a machine for transferring sausages (100) of a certain diameter from a first conveyor belt to a second conveyor belt according to any one of claims 1 to 11;
- a third conveyor belt (30) arranged above the second conveyor belt (20) and configured to advance in a third advance direction (D3) at a third advance speed, said third advance direction (D3) being parallel to the second advance direction (D2), said third conveyor belt (30) comprising a plurality of spaced apart paddles (31) configured for creating batches of sausages (100) from the plurality of sausages (100) arranged on the second conveyor belt (20);
said second conveyor belt (20) being a retractable conveyor belt and being configured to retract towards a retracting direction (R) being opposite to the second advance direction (D2); and
wherein the spaced apart paddles (31) of the third conveyor belt (30) are configured to act as a stop of the batches of sausages (100) in the retracting direction while the second conveyor belt (20) retracts, so that the batches of sausages (100) fall into an inferior level.

14. System (2), according to claim 13, further comprising a sausage loading unit, which comprises:
- a carriage movable along the first conveyor belt (10);
- a sausage discharge unit for placing sausages (100) on the first conveyor belt (10); and
- a sausage feeding conveyor belt for feeding sausages (100) to the sausage discharge unit;
wherein the carriage is configured to synchronize with the first advance speed of the first conveyor belt (10) so that sausages (100) are placed on the first conveyor belt (10) in a substantially contiguous manner in parallel arrangement, adjacent to each other.

15. System (2), according to claim 13 or 14, further comprising an automatic packaging unit arranged for collecting and packaging the batches of sausages (100) at the inferior level.
